# FASCICULE DE BREVET EUROPEEN

(11) **EP 0 519 823 B1**
(45) Date de publication et mention de la délivrance du brevet: **21.12.1994**
(21) Numéro de dépôt: 92401697.5
(22) Date de dépôt: 18.06.1992
(51) Int. Cl.: F02C 7/20, B64D 27/00, F01D 25/16

(54) **Structure de suspension arrière d'un turboréacteur**
Hinteraufhängungstruktur für eine Strahlturbine
Rear suspension structure for a turbine engine

(30) Priorité: 19.06.1991 FR 9107514
(43) Date de publication de la demande: 23.12.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Debeneix, Pierre, F-77930 Saint Sauveur sur Ecole (FR)

(56) Documents cités:
- EP-A- 0 431 800
- GB-A- 1 506 952
- GB-A- 2 129 501

## Description

L'invention concerne une structure de suspension arrière par laquelle le carter d'échappement d'un turboréacteur peut être suspendu au mât placé sous l'aile d'un avion.

L'accrochage d'un turboréacteur sous l'aile d'un avion s'effectue par l'intermédiaire d'un mât conçu pour assurer la transmission mécanique des efforts entre le turboréacteur et la structure de l'avion. Le turboréacteur est suspendu au mât en deux points définissant une suspension avant et une suspension arrière. La transmission des efforts de poussée s'effectue quant à elle au travers de barres de reprise de poussée inclinées situées de part et d'autre du turboréacteur.

La structure de suspension arrière comprend habituellement au moins trois oreilles ou chapes d'accrochage extérieures qui sont réalisées d'un seul tenant à la partie supérieure du carter d'échappement du turboréacteur. Ces oreilles permettent de fixer le carter d'échappement aux extrémités inférieures de trois biellettes de suspension dont les extrémités supérieures sont montées sur une structure d'accrochage en arc de cercle fixée directement sous le mât servant à supporter le turboréacteur.

Dans le cas où le carter d'échappement du turboréacteur présente en section la forme d'un polygone régulier dont les côtés sont formés par des plaques planes du carter, les axes géométriques des oreilles d'accrochage sont normalement situés en des sommets de ce polygone. Cette caractéristique permet de n'engendrer dans la structure des plaques planes attenantes aux oreilles d'accrochage que des efforts de suspension en traction ou en compression. Cela conduit à donner à l'épaisseur de ces plaques une valeur minimale qui serait insuffisante si le mode d'accrochage pouvait entraîner des efforts de flexion.

Les oreilles d'accrochage sont accrochées aux extrémités inférieures des biellettes de suspension par des axes de fixation orientés parallèlement à l'axe géométrique du turboréacteur. Cela conduit à former au droit de chacune des oreilles d'accrochage une partie en creux en forme de feston sur la surface extérieure du carter d'échappement du turboréacteur. La profondeur de cette partie en creux est d'autant plus grande que les charges à transmettre sont importantes, car le diamètre des axes de fixation est alors plus élevé.

Le carter d'échappement supporte un carter ou moyeu central par des bras inclinés par rapport à une direction radiale, raccordés aux sommets du polygone formé en section par le carter d'échappement. Ces bras définissent à l'intérieur de ce dernier des secteurs consécutifs dans lesquels sont canalisés les gaz issus de la chambre de combustion du turboréacteur. Les parties en creux formées au droit de chacune des oreilles d'accrochage ont donc pour effet de réduire la section d'écoulement des gaz d'échappement dans les secteurs correspondants. La perturbation ainsi engendrée par rapport à la veine d'écoulement théorique des gaz dans chaque secteur se traduit par une baisse de rendement du turboréacteur et par un accroîssement de la consommation en carburant. Ces effets sont d'autant plus importants que la charge transmise au travers de chacune des oreilles d'accrochage est élevée.

Par ailleurs, les bras inclinés supportant le moyeu central sont d'inégales longueurs, selon qu'ils sont rattachés au carter d'échappement à l'emplacement d'une oreille d'accrochage, ou non. Cela introduit un déséquilibre lors des dilatations thermiques qui se produisent entre les différents régimes du turboréacteur.

Pour remédier à ces inconvénients, on peut déplacer les oreilles d'accrochage vers l'extérieur par rapport au sommet du polygone formé en section par le carter d'échappement, comme l'illustre notamment le document GB-A-1 506 952. Cependant, les efforts engendrés par la suspension du turboréacteur introduisent alors des flexions locales dans les plaques planes formant carter d'échappement, ce qui nécessite d'accroître les épaisseurs des plaques et, par conséquent, la masse du turboréacteur. On aboutit donc ainsi à un résultat inverse de celui recherché.

L'invention a précisément pour objet une structure de suspension arrière de turboréacteur dont la conception originale permet de préserver la continuité de la veine théorique d'écoulement des gaz d'échappement et d'améliorer la tenue mécanique de l'ensemble lors des dilatations thermiques, sans engendrer de flexion locale dans les plaques du carter d'échappement et, par conséquent, sans engendrer d'augmentation de masse dans le turboréacteur.

Conformément à l'invention, ce résultat est obtenu au moyen d'une structure de suspension arrière d'un carter d'échappement de turboréacteur comportant au moins trois oreilles d'accrochage extérieures ayant des axes géométriques situés en des sommets d'un polygone formé en section par le carter, caractérisée par le fait que les sommets du polygone comportant des oreilles d'accrochage sont décalés radialement vers l'extérieur par rapport à un polygone régulier comportant les sommets dépourvu d'oreille d'accrochage.

En d'autres termes, le polygone formé en section par le carter d'échappement du turboréacteur est déformé radialement vers l'extérieur aux emplacements des oreilles d'accrochage, par rapport au polygone régulier formé habituellement par le carter. De cette manière, les efforts supportés par les plaques du carter d'échappement restent strictement limités à des efforts de traction et de compression. Cependant, la déformation locale du polygone formé par le carter assure une meilleure continuité de la veine théorique d'écoulement des gaz d'échappement que dans le cas d'un polygone régulier. De plus, cette déformation locale permet de redonner à tous les bras une longueur à peu près égale, ce qui assure une meilleure tenue mécanique de l'ensemble lors des dilatations thermiques.

Chacun des sommets du polygone formé en section par le carter d'échappement étant normalement relié par un bras à un moyeu central du turboréacteur, tous les secteurs du carter délimités par deux bras consécutifs présentent alors sensiblement la même section.

De préférence, le carter d'échappement du turboréacteur comporte un bossage intérieur au droit de chacune des oreilles d'accrochage, ce bossage intérieur diminuant la section du secteur correspondant d'une valeur sensiblement égale à un accroissement de cette même section dû au décalage radial vers l'extérieur du sommet du polygone portant l'oreille d'accrochage correspondante.

On décrira maintenant, à titre d'exemple non limitatif, un mode de réalisation préféré de l'invention, en se référant aux dessins annexés, dans lesquels :
- la figure 1 est une vue de côté, en coupe partielle, illustrant de façon très schématique la suspension d'un turboréacteur sous une aile d'avion ;
- la figure 2 est une section prise selon la ligne II-II de la figure 1, illustrant à plus grande échelle la structure de suspension arrière conforme à l'invention ;
- la figure 3 est une section comparable à la figure 2 illustrant encore à plus grande échelle la structure du carter d'échappement au voisinage des oreilles d'accrochage de ce carter, la structure selon l'invention étant représentée en trait plein alors que la structure de l'art antérieur est représentée en traits discontinus ; et
- la figure 4 est une vue comparable à la figure 3 illustrant la compensation de la diminution de section de la veine théorique d'écoulement des gaz d'échappement au droit d'une oreille d'accrochage par la déformation vers l'extérieur du polygone formé en section par le carter d'échappement, à l'emplacement de cette oreille, conformément à l'invention.

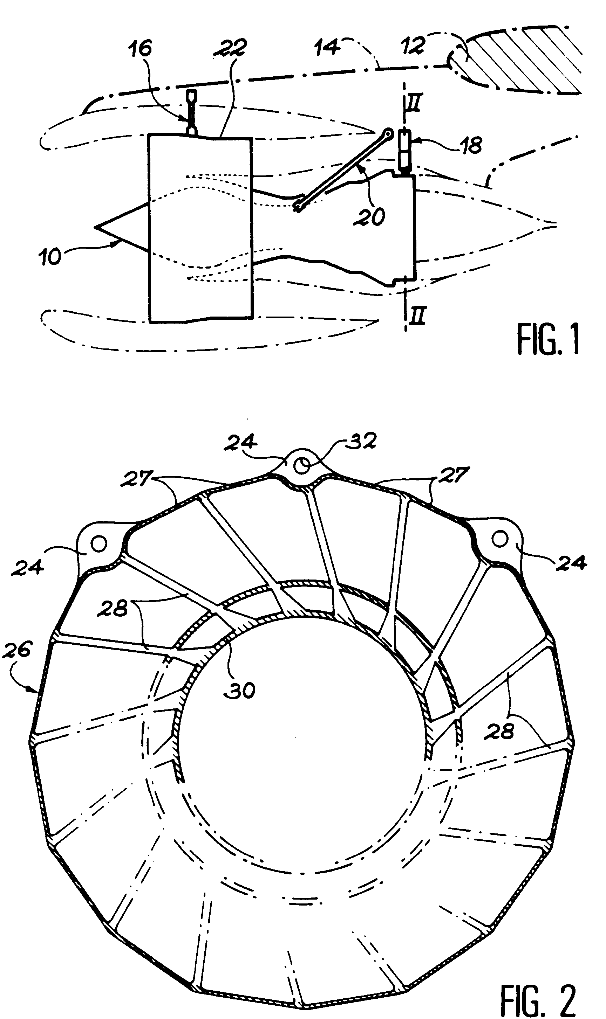

Sur la figure 1, on a représenté la suspension d'un turboréacteur 10 sous une aile d'avion 12 dont seule la partie avant est visible. Cette suspension est réalisée par l'intermédiaire d'un mât 14 qui fait saillie vers l'avant en dessous du bord d'attaque de l'aile 12.

Le turboréacteur 10 est suspendu au mât 14 par une structure de suspension avant 16 et par une structure de suspension arrière 18 autorisant le démontage du turboréacteur lorsque cela est nécessaire. La liaison entre le turboréacteur 10 et le mât 14 est complétée par des barres de reprise de poussée 20, situées de part et d'autre du turboréacteur et au travers desquelles l'effort de poussée exercé par le turboréacteur est transmis par le mât 14 à l'aile 12 de l'avion.

La structure de suspension avant 16 du turboréacteur 10 comprend habituellement des biellettes de suspension (non représentées), accrochées à la partie avant du mât 14 et dont les extrémités inférieures sont fixées sur le carter de soufflante 22.

La structure de suspension arrière 18, qui fait l'objet de la présente invention, comporte de façon connue une structure d'accrochage en arc de cercle (non représentée) fixée sous le mât 14 et des biellettes de suspension (non représentées), généralement au nombre de trois, dont les extrémités supérieures sont montées par des axes sur la structure d'accrochage en arc de cercle et dont les extrémités inférieures sont montées par des axes sur des oreilles ou chapes d'accrochage 24, fabriquées d'un seul tenant avec le carter d'échappement 26 du turboréacteur 10, comme l'illustre la figure 2.

Le carter d'échappement 26 du turboréacteur est un carter monobloc, qui présente en section la forme d'un polygone comportant seize sommets dans l'exemple représenté. Les côtés de ce polygone sont matérialisés par des plaques planes successives 27 du carter d'échappement 26. Ce dernier est relié par des bras rectilignes 28 à un moyeu 30. Les bras 28 sont régulièrement répartis sur toute la périphérie du moyeu 30 et ils sont raccordés par leurs extrémités extérieures à chacun des sommets du polygone formé en section par le carter 26. On compte donc également seize bras 28 dans le mode de réalisation illustré sur la figure 2.

De façon connue, les bras 28 sont tous inclinés dans le même sens et d'un même angle, par exemple, d'environ 15°, par rapport à une direction radiale. Cette caractéristique autorise une dilatation différentielle entre le carter d'échappement 26 et le moyeu 30, sans entraîner de risque de flambage dans les bras 28.

Chacune des trois oreilles d'accrochage 24 qui équipent extérieurement le carter d'échappement 26 comporte un trou de passage 32, de section circulaire, dans lequel peut être reçu un axe (non représenté) servant à monter l'oreille d'accrochage correspondante à l'extrémité inférieure d'une biellette de suspension (non représentée). Les trois oreilles d'accrochage 24 sont placées à la partie supérieure du carter 26, de telle sorte que les axes géométriques des trous de passage 32 coïncident avec trois sommets du polygone formé en section par le carter.

De façon plus précise, l'un de ces sommets est situé dans le plan vertical médian du carter 26 et les deux autres sommets sont disposés symétriquement par rapport à ce plan et séparés du sommet comportant l'oreille d'accrochage centrale 24 par deux sommets intermédiaires dépourvus d'oreilles d'accrochage. Ces deux derniers sommets sont donc situés à 45° de part et d'autre du plan vertical médian précité, lorsque le polygone formé en section par le carter comprend seize côtés.

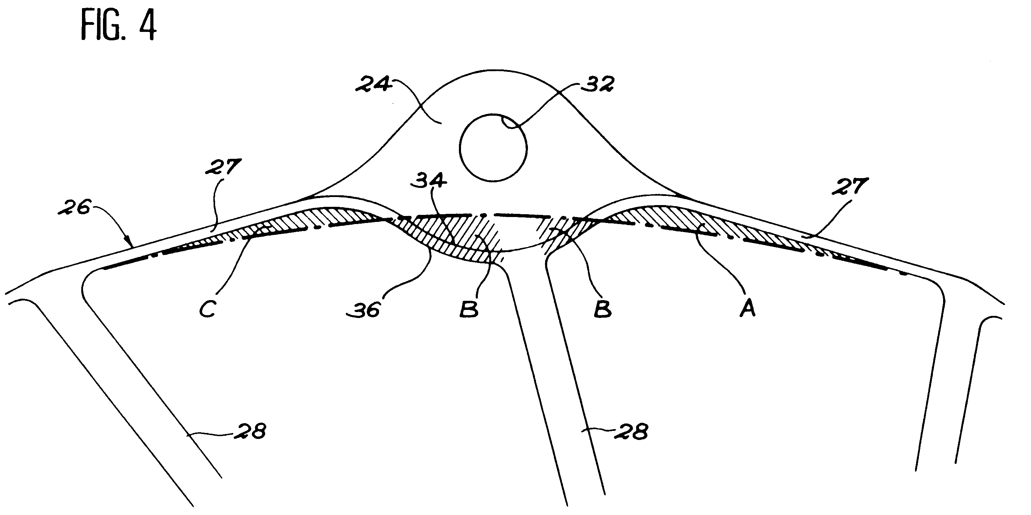

En dehors des côtés adjacents aux sommets sur lesquels sont situés les axes géométriques des trous 32, le polygone formé en section par le carter d'échappement 26 est un polygone régulier circonscrit à la veine d'écoulement théorique des gaz d'échappement à l'intérieur du carter 26, délimitée par le cercle A sur la figure 4.

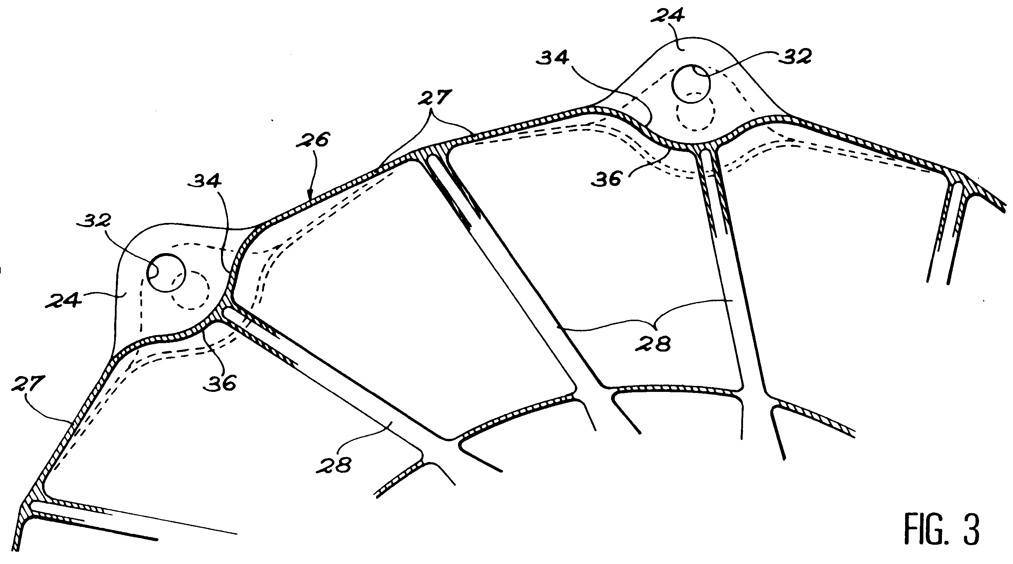

En revanche, les sommets du polygone sur lesquels sont situés les axes géométriques des trous 32 formés dans les oreilles 24 sont décalés radialement vers l'extérieur par rapport aux sommets correspondants du polygone régulier précité. Cette caractéristique apparaît clairement sur la figure 3, sur laquelle on a représenté en trait plein la forme donnée au carter 26 selon l'invention et en traits discontinus la forme qu'aurait le carter 26 dans les parties adjacentes aux oreilles 24, si le polygone formé en section par le carter était régulier à cet endroit.

En d'autres termes, le polygone formé en section par le carter d'échappement 26 est déformé radialement vers l'extérieur à chacun des trois sommets correspondant aux oreilles 24, de telle sorte que les axes des trous 32 formés dans ces dernières soient déplacés vers l'extérieur sur une même distance, selon la direction du bras 28 auquel est relié le sommet correspondant, par rapport à la position qu'occuperait ce même axe si le polygone était également régulier à cet endroit.

Cette déformation du polygone formé en section par le carter d'échappement 26 est cependant telle que les axes des trous 32 formés dans chacune des oreilles 24 restent situés dans le prolongement des plaques planes 27 du carter 26 définissant les côtés du polygone attenant à ce sommet, ainsi que dans le prolongement du bras 28 correspondant. Grâce à cet agencement, la suspension du carter 26 par la structure de suspension 18 (figure 1) n'engendre sur les plaques du carter attenantes aux oreilles 24 et sur les bras 28 que des efforts de traction ou de compression, et non des efforts de flexion. Par conséquent, l'épaisseur du carter 26 peut être minimisée, de telle sorte que la masse du turboréacteur n'est pas pénalisée par la structure conforme à l'invention.

Par ailleurs et comme l'illustre mieux la figure 4, la déformation du polygone formé en section par le carter d'échappement 26 à proximité de chacune des oreilles d'accrochage 24 permet de donner à tous les secteurs du carter 26 délimités par deux bras consécutifs 28 sensiblement la même section sur toute la circonférence du carter, malgré la présence d'une partie en creux 34 en forme de feston sur la surface extérieure du carter 26, à laquelle correspond intérieurement un bossage 36, au droit de chacune des oreilles 24. En effet, la diminution B de la section de la veine d'écoulement théorique à l'intérieur de chaque secteur du carter adjacent à une oreille 24, résultant de la présence du bossage 36 a une valeur sensiblement égale à l'accroissement C de la section de le veine d'écoulement théorique dans ce même secteur dûe au décalage radial vers l'extérieur du sommet du polygone portant l'oreille d'accrochage 24 correspondante.

Grâce à cet agencement particulier, la continuité de la veine d'écoulement théorique des gaz d'échappement du turboréacteur n'est pratiquement pas perturbée par la présence des oreilles 24.

Par ailleurs, la déformation vers l'extérieur du polygone formé en section par le carter d'échappement 26, à l'emplacement des oreilles d'accrochage 24, a pour effet de donner aux bras 28 correspondants une longueur très proche de celle des autres bras 28. La tenue mécanique de l'ensemble lors de dilatations thermiques est ainsi améliorée.

Dans la pratique, la profondeur des parties en creux 34 et, par conséquent, la hauteur des bossages intérieurs 36 sont d'autant plus importantes que le diamètre du trou 32 est grand. Par conséquent, le décalage vers l'extérieur de l'axe du trou 32 par rapport au sommet d'un polygone régulier comportant tous les sommets dépourvus d'oreilles 24 est d'autant plus grand que le diamètre des trous 32 est important.

Bien entendu, l'invention n'est pas limitée au mode de réalisation qui vient d'être décrit à titre d'exemple, mais en couvre toutes les variantes telles que définies dans les revendications. Ainsi, on comprendra notamment que le nombre d'oreilles d'accrochage équipant le carter d'échappement peut être supérieur à trois, par exemple si l'on désire prévoir un point d'accrochage supplémentaire afin d'accroître la sécurité.

## Revendications

1. Structure de suspension arrière d'un carter d'échappement (26) de turboréacteur, comportant au moins trois oreilles d'accrochage extérieures (24) ayant des axes géométriques situés en des sommets d'un polygone formé en section par le carter (26), caractérisée par le fait que les sommets du polygone comportant des oreilles d'accrochage (24) sont décalés radialement vers l'extérieur par rapport à un polygone régulier comportant les sommets dépourvus d'oreille d'accrochage.

2. Structure de suspension arrière selon la revendication 1, caractérisée par le fait que, chacun des sommets du polygone formé en section par le carter (26) étant relié par un bras (28) à un moyeu central (30) du turboréacteur, tous les secteurs du carter délimités par deux bras (28) consécutifs présentent sensiblement une même section.

3. Structure de suspension arrière selon la revendication 2, caractérisée par le fait que le carter (26) comporte un bossage intérieur (36) au droit de chacune des oreilles d'accrochage (24), ce bossage intérieur diminuant la section d'une veine théorique d'écoulement de gaz d'échappement dans le secteur correspondant d'une valeur (B) sensiblement égale à un accroissement (C) de cette même section dû au décalage radial vers l'extérieur du sommet du polygone portant l'oreille d'accrochage (24).

## Patentansprüche

1. Hintere Aufhängung eines Austrittgehäuses (26) einer Strahlturbine, mit zumindest drei außenliegenden Befestigungsösen (24) mit an den Ecken eines bei einem Schnitt durch das Gehäuse (26) gebildeten Polygons liegenden geometrischen Achsen,
**dadurch gekennzeichnet,**
daß die Ecken des Polygons mit den Befestigungsösen (24) radial nach außen versetzt sind bezüglich eines regelmäßigen Polygons mit Ecken ohne Befestigungsösen.

2. Hintere Aufhängung gemäß Anspruch 1,
**dadurch gekennzeichnet,**
daß jede der Ecken des beim Schnitt durch das Gehäuse (26) gebildeten Polygons über einen Arm (28) mit einer Zentralnabe (30) der Strahlturbine verbunden ist, wobei alle von zwei aufeinanderfolgenden Armen (28) begrenzten Sektoren des Gehäuses einen im wesentlichen gleichgroßen Querschnitt aufweisen.

3. Hintere Aufhängung gemäß Anspruch 2,
**dadurch gekennzeichnet**,
daß das Gehäuse (26) nahe bei jeder Befestigungsöse (24) einen inneren Vorsprung (36) aufweist, wobei dieser innere Vorsprung den Querschnitt eines theoretischen Austritts-Gasstromprofiles in dem Sektor um einen Wert (B) verringert, der im wesentlichen einer Zunahme (C) dieses gleichen Querschnittes entspricht, die durch die radiale Verschiebung der die Befestigungsöse (24) tragenden Ecke des Polygons nach außen hin verursacht wird.

## Claims

1. A rear suspension structure for a turbojet engine exhaust casing (26), the structure comprising at least three external mounting lugs (24) having geometric axes disposed at corners of a polygon formed in cross-section by the casing (26), characterised in that the polygon corners having mounting lugs (24) are offset radially outwards as compared with a regular polygon without mounting lugs at the corners.

2. A rear suspension structure according to claim 1, chararcterised in that, each of the corners of the polygon formed in cross-section by the casing (26) being connected by an arm (28) to a central hub (30) of the turbojet engine, all the casing sectors defined by two consecutive arms (28) have substantially the same cross-section.

3. A rear suspension structure according to claim 2, characterised in that the casing (26) has an inner protuberance (36) near each mounting lug (24), the inner protuberance reducing the cross-section of a theoretical exhaust gas flow path in the corresponding sector by a value (B) substantially equal to such increase (C) of the latter cross-section as arises from the radially outward offsetting of the polygon corner having the mounting lug (24).
